# EUROPEAN PATENT APPLICATION

(11) **EP 2 660 221 A1**
(43) Date of publication of application: **06.11.2013**
(21) Application number: 11854109.3
(22) Date of filing: 21.06.2011
(51) Int. Cl.: C04B 33/36

(54) **METHOD FOR PREPARING AN AQUEOUS CLAY PASTE AND USE THEREOF IN THE MANUFACTURE OF CERAMIC MATERIALS**

(30) Priority: 31.12.2010 ES 201032017 P
(71) Applicant: Bou Cortés, María Lidón, 12110 ALCORA (Castellón) (ES); Vujic, Dura, Novi Sad (RS); Sremac, Sinisa, 21000 Novi Sad (YU)
(72) Inventor: Bou Cortés, María Lidón, 12110 ALCORA (Castellón) (ES); Vujic, Dura, Novi Sad (RS); Sremac, Sinisa, 21000 Novi Sad (YU)
(74) Representative: Ungria López, Javier
(86) International application number: PCT/ES2011/070447
(87) International publication number: WO 2012/089873

(57) **Abstract**

The invention relates to a method for preparing an aqueous clay paste, characterized in that it includes at least the steps of: preparing a first mixture of clay and phosphoric acid and kneading; and adding hydrated sodium silicate (Na₂O) - (SiO₂) - (H₂O) to said mixture, preferably having a 30% content of SiO₂, also preferably in a phosphoric acid and sodium silicate ratio of at least 1:3 by weight; and kneading the final mixture. Said method includes different variants, depending on the content of water in the clay starter. The invention likewise relates to a method for manufacturing ceramic materials in which the aqueous clay paste is used as a raw material, which are obtainable by the method described herein, as well as to the aqueous clay paste and the ceramic material produced by both methods. The invention additionally relates to the use of the aqueous clay paste for manufacturing ceramic materials.

## Description

### TECHNICAL FIELD OF THE INVENTION

The present invention is framed within the field of the manufacturing of clay materials obtained by extrusion or pressing, especially for their use in the construction industry.

### BACKGROUND OF THE INVENTION

The production of ceramic materials from clay and other raw materials is broadly known in the field of the ceramic and construction industries. In a simplified manner, the process for obtaining clay products by extrusion is based on the addition of water to said clay in determined ratios to obtain a humid paste, which is dried prior to being submitted to a thermal firing treatment at temperatures of above 900 °C, during which a series of chemical reactions between polysilicates (silicates and aluminum silicates), which are present in the clay itself, take place. The final firing temperature depends on the type of manufactured product desired to be obtained and the raw materials (mineral composition of the clay and carbonate content). If the clay does not comprise sufficient polysilicates, it is necessary to mix it with clays rich in this type of compounds, with the purpose of obtaining the desired quality in the final product in terms of water absorption, hardness, color, capillarity, calcium oxide (CaO) content, etc. Likewise, it is possible to improve the quality of the final product by means of the addition of other compounds, which may consist, for example, of organic matter such as hay, polyethylene, oil-derived products, anthracite, paper paste, etc.

One of the main defects of the manufacturing process of ceramic products is the long period of time required for the drying of the starter material, which, in turn, is subjected to the low temperatures required to avoid the formation of possible cracks or fissures.

Likewise, another additional inconvenience of this process is the elevated temperatures at which the firing of the object has to be carried out in order to obtain the mechanical properties (hardness, water absorption, etc.) desired for the final product. These temperatures, higher than 900 °C, cause the decomposition of the carbonates in the carbon dioxide (CO₂) and calcium oxide (CaO). A part of the calcium oxide reacts with the silicates and the carbon dioxide (CO₂) is eliminated to the atmosphere. This way, as a consequence of the decomposition of the carbonates, about half of their mass is lost as CO₂. Depending on the total amount of carbonates in the clay, this effect can represent a significant weight loss in the final product. Thus, for example, in the case that carbonates represent 15% by weight of the clay, the total weight loss caused by the decomposition of carbonates is about 7%.

The closest precedent to the invention presented herein is the international patent application WO 2008/017082. Said document describes a method for preparing a starter material for manufacturing clay products, wherein said method comprises the addition of between 10% and 20% of an inert material, such as fly ash, to which 1% of sodium silicate has been previously added, and the subsequent addition of 0.4% of phosphoric acid. Unlike this international application, the present invention has been developed to obtain aqueous clay pastes that are usable in the manufacturing of ceramic materials by means of extrusion molding.

Based on the previous considerations, the present invention intends to contribute to the state of the art by improving the aforementioned method, through the application of determined chemical compounds during the preparation of the humid paste or slip, which is prepared to obtain the ceramic material, mainly constituted by clay and water mixed in specific ratios. The intention is to alter the properties of the clay, modifying its carbonate content, specifically, to decompose the CaCO₃ and other similar carbonates contained in the clay to favor the formation of additional polysilicates, with the technical, economic and environmental advantages it entails.

The main objective of the present invention is to contribute the following solution to the technical problems detected in the field:
- using clay with a high sand and carbonates content to obtain all sorts of bricks without altering the mineralogical composition of the raw materials,
- adapting the characteristics of the raw materials (clay) to the requirements of all types of manufactured products,
- obtaining products by extrusion with a high humidity content, from 25% to 40%,
- increasing the plasticity of the clay,
- preserving the specific shape of a clay product at the exit of the extruder or press with no deformations,
- increasing the mechanical hardness of the raw and dry materials at around 30%,
- accelerating the drying time due to the possibility of firing green bricks with a high humidity content and no deformations,
- reducing the duration of the firing cycle due to the increase of capillary actions (capillarity),
- decreasing the firing temperature of the product to/below 900 °C,
- reducing the emission of carbon dioxide and increasing the amount of fired goods, and
- storing problematic carbonates in the clay by means of the manufacturing of products without water-soluble salts.

In short, the present invention can be applied in any industrial field that implies the production of ceramic materials or clay-based materials with advantageous properties with respect to other similar ones, which may also be conceived as a safe and environmentally friendly method that decreases the production of polluting compounds into the atmosphere.

### DESCRIPTION OF THE INVENTION

### General description

A first object of the present invention is a method for manufacturing an aqueous clay paste, commonly known as slip, characterized in that it comprises the steps of:
- mixing clay and phosphoric acid (H₃PO₄) and grinding the mixture to obtain a homogenous mixture of the components; and
- adding hydrated sodium silicate (Na₂O)ₙ (SiO₂)ₘ (H₂O)ₖ, also known as water glass, to said mixture. The final mixture is ground (or kneaded).

In the present specification, clay is understood as a mixture of aluminum silicate aggregates, originating from the decomposition of aluminum minerals. Said clay product or aqueous clay paste can be used in turn as raw material for obtaining other products, such as ceramic materials, for example, the ones commonly used in the construction sector (tiles, floor tiles, etc.). It is understood that said ceramic materials start from the aforementioned clay material, which is transformed or formed in an industrial process until obtaining the ceramic material at the end.

Preferably, the additives are presented as an aqueous solution.

It is convenient, although preferred, that a period of time elapses between the grinding of the clay and phosphoric acid mixture and the addition of the hydrated sodium silicate, which may vary broadly, from at least 1 minute to several hours; in the case of industrial production, the ground clay is left to stand preferably for at least 24 hours so the water content is balanced and the mixture is homogenized.

The addition of the phosphoric acid and the hydrated sodium silicate must always be carried out separately and in the indicated order, not simultaneously, which marks a significant difference with the method described in the international patent application WO2008/017082. The addition of phosphoric acid and hydrated sodium silicate in the indicated order produces the following reactions:
* CaCO₃ + H₃PO₄ → CO₂ + primary, secondary or tertiary calcic phosphates
* Primaries and secondaries → polyphosphates (by heating)
* Polyphosphates → calcic silicates: CS, C₂S and C₃S (by heating hydrated SiO₂).

When the aqueous clay paste is used as a raw material in the manufacturing of ceramic materials by extrusion or pressing, these two additives, hydrated sodium silicate and phosphoric acid, originate the formation of polysilicates that allow carrying out the firing step of said ceramic material during the process at below 850 °C. The formation of said additional polysilicates is due to the decomposition of CaCO₃ (and similar carbonates) by the addition of phosphoric acid (H₃PO₄) to a mixture of a clay containing water. This process originates the formation of different calcium phosphates.

The addition of hydrated sodium silicate (Na₂O)ₙ (SiO₂)ₘ (H₂O)ₖ is carried out in order to bind the hydrated sodium silicate to the easily accessible calcium ions coming from the phosphate during the firing of the ceramic material (at temperatures above 200 °C). This way, when the firing of the aqueous clay paste is carried out in the presence of hydrated SiO₂, the different phosphates react with the clay, causing the different types of polyphosphates and hydrated sodium silicate to easily access the calcium of the calcic phosphates, resulting in different types of primary, secondary and tertiary polysilicates. These calcic silicates, formed at temperatures comprised between 200 °C and 840 °C, produce a decrease in the firing temperature of the clay product to below (or up to) 850 °C. The temperature decrease prevents the decomposition of carbonates, which supposes an advantage regarding other processes known to date.

Another object of the present invention is an aqueous clay paste, commonly known as slip, obtainable from the previous procedure, as well as its use for manufacturing ceramic materials.

Another additional object of the invention is a procedure for manufacturing ceramic materials from an aqueous clay paste, obtained according to the aforementioned method, in which said procedure is characterized in that it comprises the following steps:
(a) drying and conditioning the aqueous clay paste; and
(b) molding and firing the clay paste obtained in the previous step.
Regarding the molding, it may be carried out, preferably, by pressing or extrusion.

Finally, the present invention also includes the ceramic material obtainable from the manufacturing process detailed herein, by means of drying, molding and firing the defined aqueous clay paste. The ceramic materials obtained can be bricks, construction blocks, glazed tiles, tiles or other manufactured products made from clay.

### Detailed description

The manufacturing method of an aqueous clay paste (slip), essentially described in the previous section, is preferably characterized in that water is added when the content thereof (or, in other words, the moisture level) of the clay starter is lower than 18%, that is to say, when the water content is deemed as too low to mix all the components appropriately. This fact is due to that, in order to carry out an appropriate extrusion process, the clay or the mixture of clay with other materials must have at least 18% moisture and, preferably, a moisture level comprised between 18% and 22%. Two variants are proposed below when said condition is fulfilled.

In a preferred embodiment, a clay and water suspension is first prepared, preferably by wet grinding, prior to mixing said clay with the phosphoric acid, when the water content in the clay is lower than 18%; that is to say, the water is added to the clay directly. In a likewise preferred manner, the ratio of clay and water used in the suspension is comprised between 100:40 and 100:70, and in an even more preferred manner, this clay and water ratio is 100:62.

In another preferred embodiment, when the water content in the clay is lower than 18%, the phosphoric acid is mixed with one part of water before being mixed with the clay, and the hydrated sodium silicate is mixed with another part of water before being added to the previous mixture; that is to say, the water needed to hydrate the clay is not added directly to the latter, but is added in parts and mixed with the additives, which are soluble. The preparation of the suspensions of the two additives with water before adding them to the clay allows obtaining a more homogenous mixture of the components when the clay presents the indicated water content (below 18%), due to the fact that it is using a small amount by weight of the additives. In summary, in this embodiment, the method comprises the following steps:
- preparing a suspension comprising one part of water and the phosphoric acid (H₃PO₄),
- adding said suspension to the clay and grinding; and
- adding a second suspension comprising another part of water and the hydrated sodium silicate (Na₂O)ₙ (SiO₂)ₘ (H₂O)ₖ, and grinding.

It must be understood that the two parts of water added to the clay in two different suspensions, add up to the total (100%) amount of water that must be added.

However, when the water content (or humidity level) of the clay starter is equal to or higher than 18%, adding water to the mixture is not necessary. In this case, the phosphoric acid is added to the clay directly to form a mixture, preferably by means of pulverization or spraying in small drops, and the hydrated sodium silicate is also added directly to the previous mixture, preferably by means of pulverization or spraying. Preferably, the additives are presented as an aqueous solution.

In any of the exposed embodiments, the clay starter preferably presents a carbonate content by weight of at least 3%. If the selected clay starter presents a low carbonate ratio, generally below 3% by weight, then they may be added by means of an additional initial step of carbonate addition, preferably by means of the mixture of the clay starter with another carbonate-rich clay, more preferably limestone clay (CaCO₃), or other similar carbonate-rich material.

The clay may be preferably mixed with one or several inert materials, such as, preferably, sand or leftovers from other ceramic products manufacturing processes, finely divided (broken bricks, etc.).

In any of the variants exposed for the developed method, after the grinding of the final mixture, the aqueous clay paste obtained is preferably left to stand. Also preferably, the phosphoric acid is added to the clay, not all at once, but slowly, carrying out the addition preferably in between 1 and 5 minutes, including both limits; for example, in 4 minutes. Optionally, the addition is carried out by dripping or aspersion. The kneading of clay and phosphoric acid, the acid either being on its own or in a suspension with one part of water, can last between 5 and 20 minutes, 10 minutes being preferred.

Preferably, the SiO₂/Na₂O ratio in the hydrated sodium silicate [(Na₂O)ₙ (SiO₂)ₘ (H₂O)ₖ] is at least 3.0 w/w, or the highest available. This way, even though the SiO₂ percentage used is preferably the highest possible, said percentage is not limitable, since any industrially available percentage may be used. Regarding the SiO₂ content in the hydrated sodium silicate, it is approximately 30% by weight.

Specifically, the phosphoric acid (H₃PO₄) used in the procedure can consist of industrial grade phosphoric acid, with a concentration of 75% v. Preferably, the weight ratio of the phosphoric acid and hydrated sodium silicate solution is comprised between 1:1 and 1:5 w/w, a 1:3 w/w ratio being specially preferred.

As indicated above, the purpose of the phosphoric acid is to react with the carbonates, mainly with the calcic carbonate, and generate a (soluble) compound with available calcium ions. The phosphoric acid reacts with the carbonates contained in the clay and produces different phosphates (primary, secondary and tertiary). Said phosphates result in appropriate polyphosphates for their heating in processes for obtaining ceramic materials.

The addition of phosphoric acid to the mixture of clay and water decreases the pH to a value below 7 (pH<7), provoking the separation of the carbon dioxide from the carbonates present in the clay.

On the other hand, the hydrated sodium silicate or water glass plays a double role in the process. On the one hand, it changes the viscosity of the clay in the mixture, which allows, if the aqueous clay paste is used in the manufacturing of ceramic materials by extrusion or pressing, said paste to pass through the extruder at the same pressure. On the other hand, the increase of the temperature during the firing step or during the heating of the green product for the manufacturing of ceramic materials causes the polyphosphoric anions to bond with the clay mixture and the calcium ions to bond with the sodium silicate. These reactions favor the formation of calcic silicates, which in reality increase the hardness of the ceramic material and also reduce the retention of water of the raw material.

Another object of the present invention is an aqueous clay paste obtainable by means of the previous method, as well as its use for the manufacturing of ceramic materials. Said aqueous clay paste is already prepared to manufacture ceramic materials, and may be preserved permanently prior to carrying out the manufacturing process of said materials.

Therefore, the present invention likewise relates to a manufacturing process of ceramic materials from an aqueous clay paste prepared according to the method described above, in any of its variants, which is used herein as a raw material, characterized in that it comprises at least the following steps:
- submitting the aqueous clay paste to drying, and
- submitting the clay paste obtained in the previous step to molding and firing, carrying out the firing below 900 °C.

It is preferable to condition the dried clay paste (that is to say, after the drying step) to obtain an appropriate molding and firing. Said conditioning can be carried out by crushing the dry clay paste, by grinding, or both. More preferably, the dry clay paste is crushed (for example, in a jaw crusher) and ground (for example, in a rolling mill, with a 2-mm separation between rollers), until a powder with an appropriate granulometry is obtained.

On the other hand, the drying is preferably submitted at a temperature comprised between 100 °C and 120 °C for a time period comprised between 12 hours and 36 hours, and more preferably, the clay paste is dried at 100 °C for 24 hours. Preferably, the paste is dried in a kiln.

In order to mold the dry clay paste (and preferably conditioned), conventional processes may be followed, such as extrusion or pressing. Commonly, preferably in this specification, the paste is subjected to moistening prior to the pressing by extrusion thereof. Firing is carried out at a temperature below 900 °C, more preferably, below 850 °C. Optionally, it is recommended that the firing of the dried and molded clay paste be carried out in several heating steps.

In the most preferred embodiment of all of those exposed above for this method for manufacturing ceramic materials, the aqueous clay paste is obtained immediately prior to submitting it to the steps of drying and molding by extrusion. It is crucial that not much time elapses because after some minutes (a few minutes, preferably less than 5 minutes and preferably no more than 1 minute), the clay paste starts losing water quickly and starts hardening. This is the reason why, preferably, the hydrated sodium silicate, the last additive of the mixture, is added in the extruder machine directly, where direct contact with the air is avoided and the moisture of the clay during the extrusion process is thus preserved. More preferably, the hydrated sodium silicate is added to the mixture of clay and phosphoric acid and is ground with all the other components of the paste directly in the double-shaft mixer of the extruder.

The dry aqueous paste is characterized preferably in that it presents a minimal portion by weight of phosphoric acid of 0.1% of the initial clay mass, and a minimal portion of water glass of 0.3%. When the clay presents an elevated carbonate content or when the mechanical properties of the final product need to be improved, these percentages must be increased.

Thanks to the aqueous clay paste used as raw material in the manufacturing of ceramic materials, the drying step of the manufacturing of the ceramic material is shorter than usual; depending on the drying device used, the time can be ⅓ or even ½ lower than normal. Another of the advantages of the procedure is the reduction of the drying temperature in at least 100 °C regarding the usual temperature of said drying step.

Likewise, the molding by pressing or extrusion of the aqueous clay paste, previously dried, results in a product that may be fired in a reduced interval of time. In addition, since the appropriate firing temperature of the ceramic materials depends on the initial product used, thanks to an important extent, to the aqueous clay paste used as raw material in this procedure, the firing temperature may be carried out at a temperature that is lower than usual, even 100 °C lower than usual (generally above 900 °C), with the consequent energy savings. This leads, in turn, to the inhibition of the decomposition of carbonates present in the fly ash, since the material is fired at a temperature below 900 °C. This way, the sintering of the components of the aqueous clay paste is completed at a temperature below 850 °C, that is to say, around 100 °C below the temperature that is usually required due to the polymerization of the calcic silicate, without causing the decomposition of the calcic carbonates, which have not reacted and remain in the clay.

Likewise, the reduction of the fusion point of Ca₃(PO₄)₂ is achieved thanks to the SiO₂, as a result of the dehydration of the sodium silicate (Na₂O)ₙ(SiO₂)ₘ(H₂O)ₖ).

The water content of the clay depends on the temperature, so the water present in the intermediate layers of the clay is lost when it is exposed to temperatures comprised between 100 °C and 250 °C. The dehydroxylation then begins at a temperature between 300 °C and 400 °C, subsequently accelerating the process and ending at a temperature between 500 °C and 600 °C.

In addition, the additives used to obtain the aqueous clay paste have a positive effect in terms of plasticity and hardening of the ceramic material in its manufacturing process. In fact, the addition of water glass causes that, after leaving the extruder, the clay or material obtained from the clay is more solid than usual. The dried ceramic materials are 25% more fracture-resistant. In addition, the chemical bonds in an early firing step create a polymeric structure of clay-sodium silicate. When turning into polyphosphoric, the phosphoric acid allows obtaining a mass with the present cations, which is completely sintered at a temperature of 850 °C.

The present specification also includes a ceramic material obtainable by means of the manufacturing process described herein, using the aqueous clay paste previously prepared according to the indications given above. Said ceramic material can be a tile, a floor tile, a brick, etc., that is to say, a material used in the construction industry. More preferably, the material is a ceramic floor tile, which can be a rustic floor tile. As said above, the specification also contemplates the use of the ceramic material as construction material.

### DESCRIPTION OF THE FIGURES

**Figure 1****.** Image of specimens made up from 12 aqueous clay pastes prepared according to the present invention in Example 1, after an absorption test.
**Figure 2a****.** Evolution of the Mechanical Flexural Strength (MFS) of several ceramic materials prepared by extrusion in Example 2, from the aqueous clay pastes from Example 1, regarding the firing temperature.

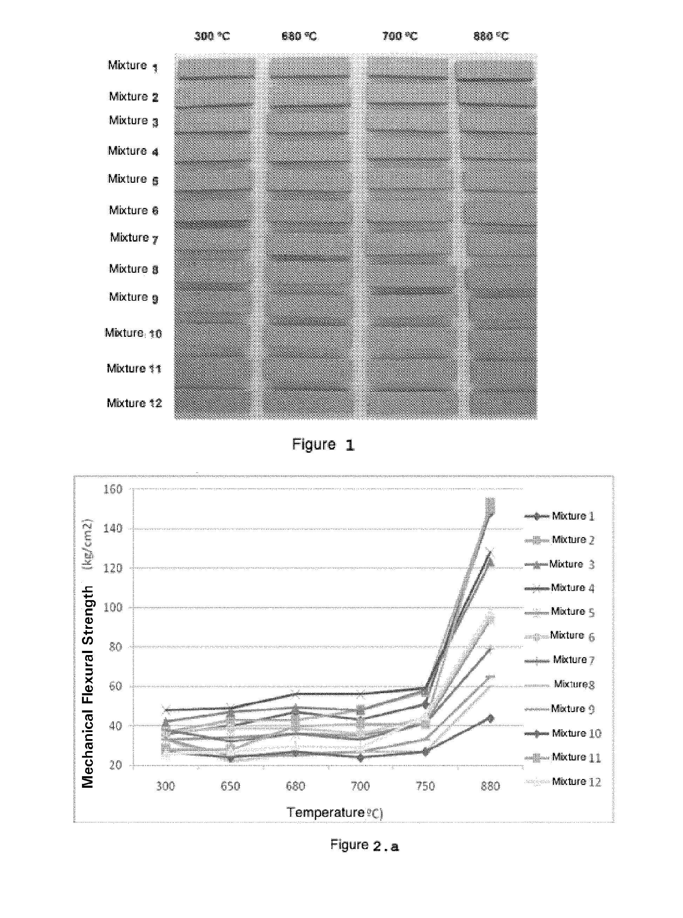

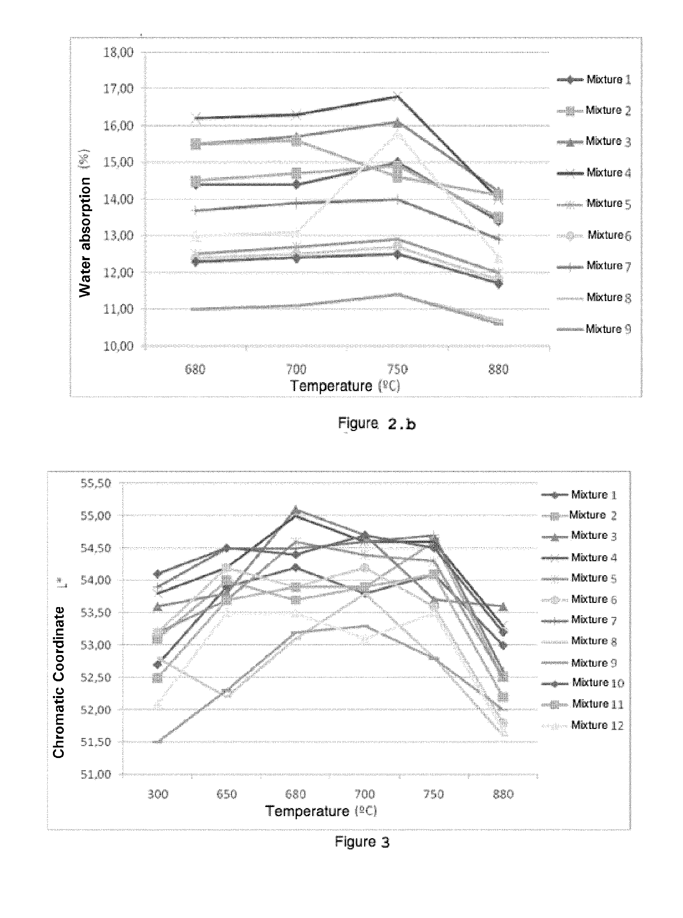

**Figure 2****b.** Evolution of the Water Absorption Capacity in the ceramic materials prepared in Example 2, regarding the firing temperature.
**Figure 3****.** Evolution of the CIELAB chromatic coordinates - coordinate L* - of the ceramic materials prepared in Example 2 from the 12 mixtures of Example 1, regarding the firing temperature.

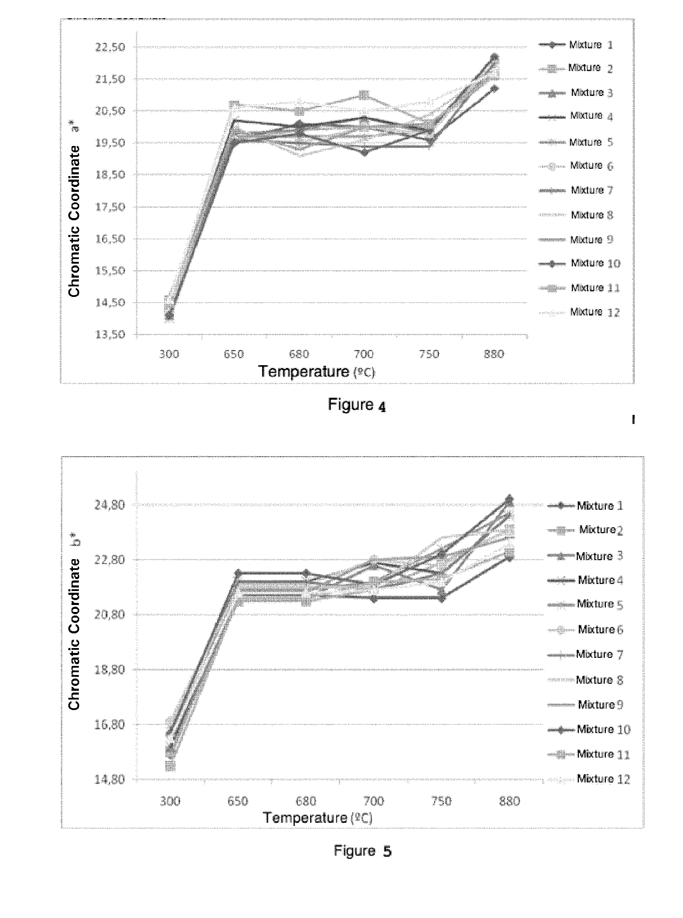

**Figure 4****.** Evolution of the CIELAB chromatic coordinates (a) coordinate a* of the ceramic materials prepared in Example 2 from the 12 mixtures of Example 1, regarding the firing temperature.
**Figure 5****.** Evolution of the CIELAB chromatic coordinates (a) coordinate b* of the ceramic materials prepared in Example 2 from the 12 mixtures of Example 1, regarding the firing temperature.

### EXAMPLES OF EMBODIMENTS OF THE INVENTION

Next, as an example and in a non-limiting manner, we have a preferred embodiment of the invention, showing the preparation of several aqueous clay pastes with variable compositions, and the manufacturing of ceramic material in laboratory conditions (not industrial), specifically specimens formed by extrusion, from said pastes, for the analysis of their physicochemical properties. The main objective consisted in demonstrating that, starting with a clay which is not appropriate for extrusion processes due to its properties, it was possible to obtain specimens formed by pressing at 6 firing temperatures, whose technological characterization proved they have advantageous and significantly better properties than conventional ceramic materials.

### Example 1. Preparation of aqueous clay pastes according to the present invention

A carbonate-rich clay, known as "Red clay with coal", was selected for the preparation of the aqueous clay paste. This clay is broadly used in the area of Jaén (Bailén), and contains more than 25% in carbonates. It was chosen due to one particularity: it cannot be extruded because it is considered too soft, and when used for industrial purposes, it must be mixed with other clays in no more than 30% of the final composition. Barium salts must be added to reduce the absorption of water even when mixed.

The first objective was to determine the exact concentrations of the components to be used: clay, water and additives.

12 aqueous clay pastes were prepared from 30 kg of a mixture of said "Red clay with coal" with other clays, ground and without barium carbonate, and sand was added as inert material to some of them (pastes 5 to 10 and 12). The additives used according to the present invention were:
- hydrated sodium silicate
   * Name: neutral sodium silicate (also known as liquid silicate, sodium water glass)
   * CAS No.: 1344-09-8
   * Formula: 3.0 SiO₂-Na₂O.
   * EINECS No.: 215-687-4
- aqueous solution of industrial grade phosphoric acid.

Phosphoric acid at three concentrations, 0.25%, 0.50% and 0.75% by weight was used. The ratio defined for both additives was 1:3, which was equivalent to a hydrated sodium silicate concentration of 0.75%, 1.50% and 2.25% by weight, respectively.

Table 1 shows the composition by weight that was calculated to obtain the aqueous clay pastes according to the present invention:

**Table 1. Composition by weight of the prepared aqueous clay pastes**

| **Mixture** | **Clay (g)** | **Sand (g)** | **Additive B (g)** | **Additive A (g)** | **Water (g)** |
|---|---|---|---|---|---|
| 1 | 2520 | - | 6.3 | 13.86 | 1008 |
| 2 | 2520 | - | 12.6 | 27.72 | 1008 |
| 3 | 2520 | - | 37.8 | 83.16 | 1008 |
| 4 | 2520 | - | 63.0 | 138.6 | 1008 |
| 5 | 2268 | 504 | 6.3 | 13.86 | 907 |
| 6 | 2268 | 504 | 12.6 | 27.72 | 907 |
| 7 | 2268 | 504 | 37.8 | 83.16 | 907 |
| 8 | 2016 | 1008 | 6.3 | 13.86 | 806 |
| 9 | 2016 | 1008 | 12.6 | 27.72 | 806 |
| 10 | 2016 | 1008 | 37.8 | 83.16 | 806 |
| 11 | 1400* | - | - | - | 557.8 |
| 12 | 1400* | 311.1 | - | - | 559.9 |

| | | | | | |
|---|---|---|---|---|---|
| * Clay with barium carbonate. | | | | | |

Given that the water content of the clay starter was lower than 18%, a phosphoric acid suspension with one part of water was prepared in order to prepare the aqueous clay pastes, this part being approximately 50% of the total calculated to be added to the total mixture, and the clay (with sand in the mixtures 5 to 10 and 12) was slowly added over said suspension for 4 minutes. The mixture obtained was kneaded for 10 minutes. After kneading, a second suspension comprising another part of water (the other 50% of the total added) and the total amount of hydrated sodium silicate, was added to the previous mixture. After kneading, it was left to stand.

### Example 2. Preparation of ceramic materials from the aqueous clay pastes of Example 1.

The prepared aqueous clay pastes were poured in trays and dried on a kiln at 110 °C for 24 hours. The solid obtained, once dried, was passed through a jaw grinder and a rolling mill with a 2-mm separation between rollers. The granulometry of the powder obtained was deemed adequate for the manufacturing of pressed specimens.

To form the pressed specimens, the powder was first moistened at 7%, and subsequently, said moisture was left to homogenize for 24 hours. The first forming pressure used was 330 Kg/cm²; however, it was observed that the specimens with the highest additive percentage were left adhered to the mold, making their extraction difficult. Taking into account this difficulty, pressing was carried out at 660 Kg/cm². The dimensions of the specimens are 80x20 mm, with a thickness comprised between 7 and 8 mm.

The firing cycles carried out in an electric kiln of the laboratory at five maximum temperatures (650 °C, 680 °C, 700 °C, 750 °C, 880 °C) are summarized in Table 2. Said cycles attempt to reproduce the conditions of the rolling kiln used for firing in the ceramics industry. A sixth thermal treatment was carried out at 300 °C. A heating and cooling temperature of 5 °C/min was selected for said thermal cycle.

**Table 2. Steps of the firing cycle used for the sintering of the extruded specimens**

| Step | Tmax= 650 °C | | Tmax= 680 °C | | Tmax= 700 °C | | Tmax= 750 °C | | Tmax= 880°C | |
|---|---|---|---|---|---|---|---|---|---|---|
| | V. °C/min | T. °C | V. °C/min | T.°C | V. °C/min | T.°C | V. °C/min | T. °C | V. °C/min | T.°C |
| Heating | - | - | 2.5 | 280 | 2.5 | 300 | 3.5 | 350 | 4.5 | 480 |
| Heating | 3 | 500 | 4 | 430 | 4 | 450 | 4 | 500 | 4 | 630 |
| Heating | 1 | 550 | 1 | 480 | 1 | 500 | 1 | 550 | 1 | 680 |
| Heating | 4 | 650 | 4 | 680 | 4 | 700 | 4 | 750 | 4 | 880 |
| Cooling* | 6.5 | 270 | 6.5 | 300 | 6.5 | 320 | 6.5 | 370 | 6.5 | 500 |
| Cooling | Free | | Free | | Free | | Free | | Free | |

| | | | | | | | | | | |
|---|---|---|---|---|---|---|---|---|---|---|
| * The cooling temperature rate used industrially is 10 °C/min, not being able to reproduce it in the laboratory. It is estimated that the same do not condition the final result in a sensible manner. | | | | | | | | | | |

### Example 3. Study of the technological behavior of ceramic materials prepared in Example 2.

The following analyses were conducted:
* mechanical flexural strength of the fired material;
* water absorption capacity; and
* determination of the chromatic coordinates (CIELAB).

The determination of the Mechanical Flexural Strength was carried out on 4 specimens, while the determination of the Water Absorption Capacity was carried out on 2 specimens. The determination of the chromatic coordinates in the CIELAB system was carried out on the leftovers of the specimens subjected to flexion, using D65 standard illuminant, a standard observer at 10° with the specular and ultraviolet components included.

Table 3 shows part of the results obtained. It should be noted that the specimens fired at 300 °C and 650 °C could not be subjected to the water absorption test due to the breakdown thereof. In this test, the specimens are submerged in boiling water for 2 hours. Figure 1 shows the appearance of the specimens after the absorption test. Figure 2 shows the evolution of the Mechanical Flexural Strength (Fig. 2.a) and the Water Absorption Capacity (Fig. 2.b) with the firing temperature.

The Mechanical Flexural Strength values (Table 3, Fig. 2.a) of the materials treated at 300 °C are similar to the flexural strength values of the raw materials.

The Water Absorption Capacity values of the specimens (Table 3, Fig. 2.b), show, in the first place, a tendency to rise with the firing temperature until 700 °C or 750 °C, depending on the composition, to subsequently decrease at the maximum temperature under study (880 °C).

**Table 3. Summary of the results in water absorption (%) and mechanical flexural strength (Kg/cm²)**

| | 300 °C | | 650 °C | | 680 °C | | 700 °C | | 750 °C | | 880 °C | |
|---|---|---|---|---|---|---|---|---|---|---|---|---|
| | WA** | MFS | WA** | MFS | WA | MFS | WA | MFS | WA | MFS | WA | MFS |
| 1 | - | 36 | - | 40 | 14.4 | 47 | 14.4 | 43 | 15.0 | 51 | 13.4 | 148 |
| 2 | - | 37 | - | 43 | 14.5 | 43 | 14.7 | 48 | 14.9 | 57 | 13.5 | 150 |
| 3 | - | 42 | - | 47 | 15.5 | 49 | 15.7 | 48 | 16.1 | 58 | 14.2 | 123 |
| 4 | - | 48 | - | 49 | 16.2 | 56 | 16.3 | 56 | 16.8 | 59 | 14.0 | 128 |
| 5 | - | 33 | - | 34 | 12.5 | 36 | 12.7 | 35 | 12.9 | 41 | 12.0 | 94 |
| 6 | - | 37 | - | 39 | 12.4 | 39 | 12.5 | 36 | 12.7 | 44 | 11.8 | 95 |
| 7 | - | 38 | - | 32 | 13.7 | 36 | 13.9 | 33 | 14.0 | 41 | 12.9 | 79 |
| 8 | - | 33 | - | 22 | 11.0 | 26 | 11.1 | 27 | 11.4 | 27 | 10.7 | 60 |
| 9 | - | 33 | - | 25 | 11.0 | 25 | 11.1 | 27 | 11.4 | 33 | 10.6 | 65 |
| 10 | - | 27 | - | 24 | 12.3 | 27 | 12.4 | 24 | 12.5 | 27 | 11.7 | 44 |
| 11 | - | 28 | - | 28 | 15.5 | 40 | 15.6 | 41 | 14.6 | 41 | 14.1 | 153 |
| 12 | - | 26 | - | 27 | 13.0 | 30 | 13.1 | 29 | 15.8 | 45 | 12.4 | 98 |

| | | | | | | | | | | | | |
|---|---|---|---|---|---|---|---|---|---|---|---|---|
| WA: water absorption in % MFS: mechanical flexural strength, expressed in Kg/cm². ** Water absorption could not be measured. The samples were not fired. | | | | | | | | | | | | |

Figures 4 and 5 show the evolution of the CIELAB chromatic coordinates with the firing temperature. In general, it could be observed an increasing tendency of coordinates a* and b* with the firing temperature. The increase of coordinate a* towards the color red and coordinate b* towards the color yellow confirms the more orange color of the specimens fired at higher temperature. It should be noted that the fluctuations observed between 650 °C and 750 °C could be due to an experimental error. Due to the relatively thick granulometry with which the specimens were formed, they present a heterogeneous surface appearance that resulted in fluctuations between the values determined for the coordinates of up to 0.8 points.

On the other hand, Figure 3 graphically shows the tendency of the different chromatic coordinates with the firing temperature. It can be observed that coordinate L* presents maximum values (representing greater whiteness) in the temperature range of 700 °C-750 °C. On the other hand, the pieces fired at 880 °C present lower L* values.

In short, from the results obtained, we can conclude that even with the smallest amounts of chemical additives, phosphoric acid and hydrated sodium silicate, the results were very satisfactory in comparison with similar materials with other compositions.

We were also able to observe that, according to the luminosity results, some significant mineralogical changes took place in the temperature interval comprised between 680 °C and 800 °C.

### Example 4. Preparation of a ceramic floor tile from the materials obtained in Examples 1 to 3.

The composition calculated for the mixture 1 of Example 1 was selected to carry out a manufacturing process of a "rustic" ceramic floor tile at low temperatures, but at an industrial level this time. As previously said, the clay selected was "Red clay with coal", without any type of inert material. The additives were added to the clay mixed with water, as indicated in Example 1.

Normally, in these manufacturing processes of rustic ceramics, the products are obtained by molding and with the addition of sand as inert material to the mixture, in addition to barium salts. However, this experiment, carried out with an aqueous clay paste according to the present invention, will attempt to demonstrate that this type of floor tiles can be obtained by extrusion without the addition of barium salts, and above all, without drying at temperatures higher than 850 °C.

Just after the first grinding of the clay and water, and prior to the entry into the silo, 0.2% of industrial grade phosphoric acid at 75% was added directly in the conveyor belt, directly dispersed over the clay. After exiting the silo, 20% of sand was added.

Subsequently, hydrated sodium silicate was added to the second mixer of the extruder, in a proportion of 0.6% by weight of the clay (the ratio of the two additives being 1:3).

After exiting the extruder, the floor tiles were transported to the kiln. Said kiln was optimized according to the following Table 4.

**Table 4. Firing curve adapted for the passage of 30x30-cm floor tiles subject of the test, at a cycle of 32 Hz (frequency of the transmission motor)**

| T.(°C) | ZONE 1 | ZONE 2 | ZONE 3 | ZONE 4 | ZONE 5 | ZONE 6 | ZONE 7 | ZONE 8 |
|---|---|---|---|---|---|---|---|---|
| Scheduled Upper | --- | 675 | 810 | 845 | 845 | 870 | 830 | 650 |
| Actual Upper | --- | 641 | 786 | 795 | 807 | 834 | 830 | 636 |
| Scheduled Lower | 410 | 660 | 795 | 800 | 810 | 830 | 830 | 675 |
| Actual Lower | 415 | 660 | 795 | 800 | 810 | 830 | 828 | 655 |

| | | | | | | | | |
|---|---|---|---|---|---|---|---|---|
| Observations: in both firing curves, the burners in upper zones 2, 3, 4, 5 and 6 are always off. | | | | | | | | |

On the other hand, Table 5 shows the results regarding the difference between the normal heating curve and the NSTA heating curve with additives.

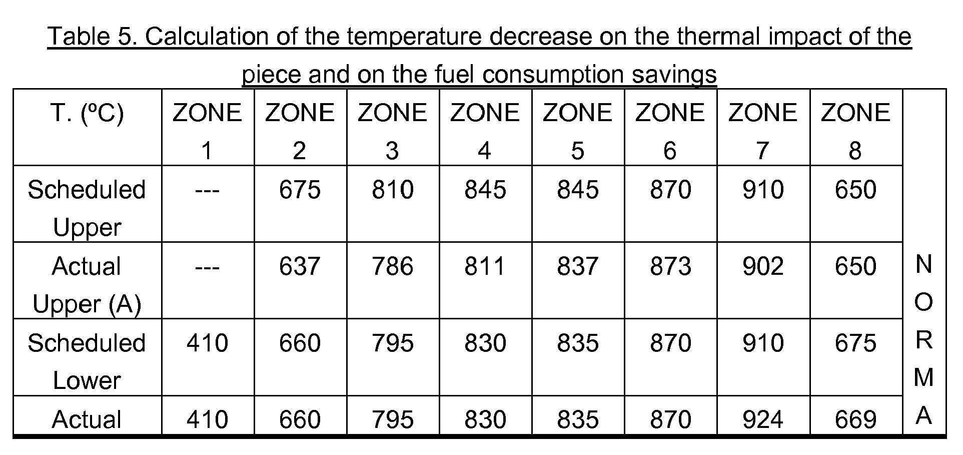

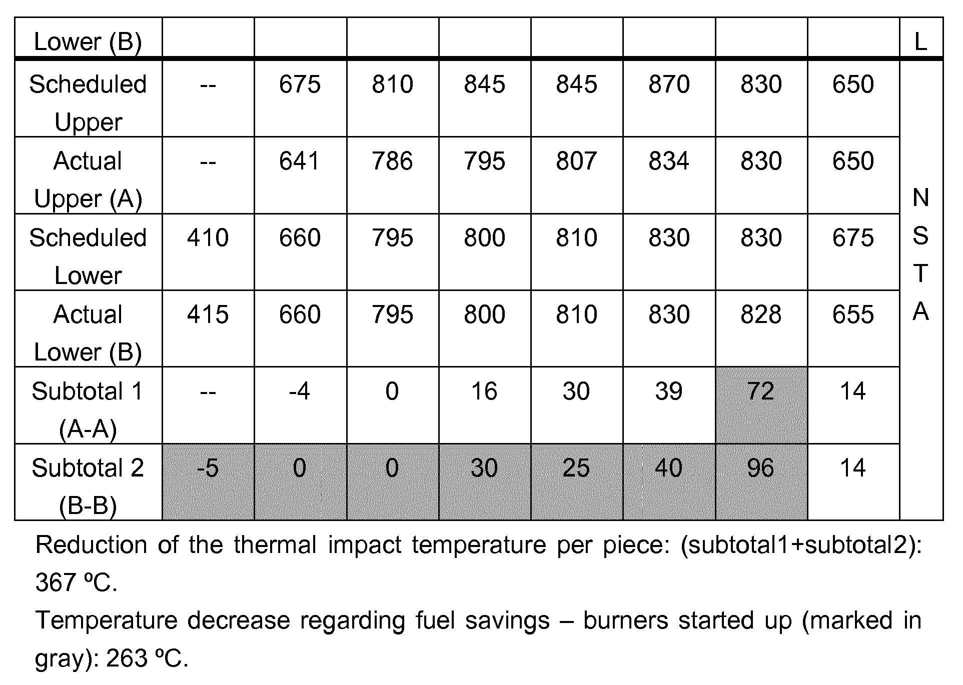

Tables 6 and 7 shows the final results of the Mechanical Flexural Strength (MFS) for the ceramic floor tiles with additives according to the present invention and for the ceramic floor tiles without additives, respectively (flexural strength and breaking load).

**Table 6. Mechanical Flexural Strength (MFS) of ceramic floor tiles with additives obtained according to Example 4.**

| Flexural strength and breaking load | | | | | | | | | | |
|---|---|---|---|---|---|---|---|---|---|---|
| Number of specimens: 10 Specimen type: whole pieces | | | | | | | | | | |
| Roll diameter (*d*): 20 mm / Rubber thickness (*t*): 5 ± 1 mm | | | | | | | | | | |
| Distance between the Support Roller Shafts (*L*): 280 mm | | | | | | | | | | |
| Distance between the Support Points with the Rollers and the Edges of the Floor Tile (*l*): 10 mm | | | | | | | | | | |
| | Floor Tile Reference | | | | | | | | | |
| | 09137 | 09137 | 09137 | 09137 | 09137 | 09137 | 09137 | 09137 | 09137 | 09137 |
| | 11 | 12 | 13 | 14 | 15 | 16 | 17 | 18 | 19 | 20 |
| Breaking Load [F] (N) | 3329 | 3227 | 3258 | 3314 | 2758 | 3052 | 3096 | 3332 | 3041 | 2765 |
| Breaking Strength [S] (N) | 3086 | 2993 | 3024 | 3075 | 2549 | 2823 | 2866 | 3087 | 2813 | 2557 |
| Flexural Strength [R] (N/mm²) | 12.3 | 12.0 | 12.1 | 12.1 | 10.1 | 11.2 | | 12.2 | 11.1 | 10.1 |
| Validity (*) | YES | YES | YES | YES | YES | YES | NO | YES | YES | YES |

| (*) For the calculation of the Average Flexural Strength, only the specimens whose validity is YES will be used, as specified in UNE-EN ISO 10545-4 (section 8). | | | | | | | | | | |
|---|---|---|---|---|---|---|---|---|---|---|
| | | Breaking Load (N) [F] | | | Breaking Strength (N) [S] | | | Flexural Strength [R] (N/mm²) (*) | | |
| Average value | | 3117 | | | 2887 | | | 11.5 | | |
| Value guaranteed by the manufacturer | | - | | | | | | | | |

**Table 7. Mechanical Flexural Strength (MFS) of ceramic floor tiles without additives. Flexural strength and breaking load**

| Number of specimens: 10 Specimen type: whole pieces | | | | | | | | | | |
|---|---|---|---|---|---|---|---|---|---|---|
| Roll diameter (*d*): 20 mm / Rubber thickness (*t*): 5 ± 1 mm | | | | | | | | | | |
| Distance between the Support Roller Shafts (*L*): 280 mm | | | | | | | | | | |
| Distance between the Support Points with the Rollers and the Edges of the Floor Tile (*l*): 10 mm | | | | | | | | | | |
| | Floor Tile Reference | | | | | | | | | |
| | 08084 | 08084 | 08084 | 08084 | 08084 | 08084 | 08084 | 08084 | 08084 | 08084 |
| | 1 | 2 | 3 | 4 | 5 | 6 | 7 | 8 | 9 | 10 |
| Breaking Load [F] (N) | 3140 | 3091 | 3027 | 3053 | 3357 | 3100 | 3434 | 3059 | 3237 | 2878 |
| Breaking Strength [S] (N) | 2931 | 2881 | 2824 | 2845 | 3127 | 2889 | 3201 | 2853 | 3020 | 2682 |
| Flexural Strength [R] (N/mm²) | 10.9 | 10.6 | 10.4 | 10.4 | | 10.7 | | 10.5 | 11.3 | 9.9 |

| Validity (*) | YES | YES | YES | YES | NO | YES | NO | YES | YES | YES |
|---|---|---|---|---|---|---|---|---|---|---|
| (*) For the calculation of the Average Flexural Strength, only the specimens whose validity is YES will be used, as specified in UNE-EN ISO 10545-4 (section 8). | | | | | | | | | | |

| | | Breaking Load (N) [F] | | | Breaking Strength (N) [S] | | | Flexural Strength [R] (N/mm²) (*) | | |
|---|---|---|---|---|---|---|---|---|---|---|
| Average value | | 3138 | | | 2926 | | | 10.6 | | |
| Value guaranteed by the manufacturer | | - | | | - | | | - | | |

From these comparative results, we can conclude that even at the lowest temperature and without a drying process, the ceramic floor tiles obtained have better mechanical properties than conventional ceramic floor tiles.

## Claims

1. Method for obtaining an aqueous clay paste, **characterized in that** it comprises at least the following steps:
- mixing clay and phosphoric acid and grinding the mixture; and
- adding hydrated sodium silicate to said mixture, and grinding.

2. Method for obtaining an aqueous clay paste according to claim 1, **characterized in that** between the grinding of the clay and phosphoric acid mixture and the addition of the hydrated sodium silicate, a period of time comprised between 1 minute and 48 hours is allowed.

3. Method for obtaining an aqueous clay paste according to any one of the claims 1 or 2, **characterized in that** water is added when the clay presents an initial water content below 18%.

4. Method for obtaining an aqueous clay paste according to claim 3, **characterized in that** the clay and water ratio added is comprised between 100:40 and 100:70.

5. Method for obtaining an aqueous clay paste according to any one of the claims 3 or 4, **characterized in that** the water is added directly to the clay by means of the preparation of a suspension of both elements, prior to mixing the clay with the phosphoric acid.

6. Method for obtaining an aqueous clay paste according to any one of the claims 3 or 4, **characterized in that** it comprises the following steps:
- preparing a first suspension comprising one part of water and the phosphoric acid,
- adding the suspension of phosphoric acid and water to the clay, and grinding the mixture; and
- adding a second suspension comprising another part of water and the hydrated sodium silicate to said mixture, and grinding the final mixture.

7. Method for obtaining an aqueous clay paste according to any one of the claims 1 or 2, **characterized in that** both the phosphoric acid and the hydrated sodium silicate are added directly to the clay when the clay presents an initial water content equal to or higher than 18%.

8. Method for obtaining an aqueous clay paste according to claim 7, **characterized in that** both the phosphoric acid and the hydrated sodium silicate are added directly to the clay by pulverization or spraying.

9. Method for obtaining an aqueous clay paste according to any one of the previous claims, **characterized in that** the clay presents a carbonate content of at least 3%.

10. Method for obtaining an aqueous clay paste according to any one of the previous claims, **characterized in that** the clay comprises one or more inert materials.

11. Method for obtaining an aqueous clay paste according to any one of the previous claims, **characterized in that** the phosphoric acid is added to the clay during a time period comprised between 1 and 5 minutes by means of dripping or aspersion, and the kneading has a duration comprised between 5 and 20 minutes, including both limits.

12. Method for obtaining an aqueous clay paste according to any one of the previous claims, **characterized in that** the phosphoric acid is of industrial grade, at a concentration of 75% by volume.

13. Method for obtaining an aqueous clay paste according to any one of the previous claims, **characterized in that** the hydrated sodium silicate presents a by weight ratio of SiO₂ and Na₂O of at least 3.00 w/w.

14. Method for obtaining an aqueous clay paste according to any one of the previous claims, **characterized in that** the SiO₂ content in the hydrated sodium silicate is 30% by weight.

15. Method for obtaining an aqueous clay paste according to any one of the previous claims, **characterized in that** the phosphoric acid and hydrated sodium silicate ratio is comprised between 1:1 w/w and 1:5 w/w.

16. Aqueous clay paste obtainable according to a procedure defined in any one of the claims 1 to 15.

17. Use of an aqueous clay paste according to the previous claim for the manufacturing of ceramic materials.

18. Process for manufacturing ceramic materials from an aqueous clay paste obtained pursuant to the method defined in any one of the claims 1 to 15, **characterized in that** it comprises at least the following steps:
- drying the aqueous clay paste, and
- submitting the clay paste of the previous step to molding and firing, carrying out the firing at a temperature lower than 900 °C.

19. Process for manufacturing ceramic materials according to claim 18, **characterized in that** the firing is carried out at a temperature equal to or lower than 850 °C.

20. Process for manufacturing ceramic materials according to any one of the claims 18 or 19, **characterized in that** after drying, the clay paste is conditioned to be submitted to molding and firing.

21. Process for manufacturing ceramic materials according to claim 20, **characterized in that** the dry clay paste is conditioned for firing by means of crushing, grinding or both consecutive actions.

22. Process for manufacturing ceramic materials according to any one of the claims 18 to 21, **characterized in that** the clay paste is dried at a temperature comprised between 100 °C and 120 °C, including both limits, for a time period comprised between 12 hours and 36 hours, including both limits.

23. Process for manufacturing ceramic materials according to any one of the claims 18 to 22, **characterized in that** the molding is carried out by extrusion or pressing.

24. Process for manufacturing ceramic materials according to any one of the claims 18 to 23, **characterized in that** the aqueous clay paste is prepared immediately prior to be submitted to the drying step.

25. Process for manufacturing ceramic materials according to claim 24, **characterized in that** the hydrated sodium silicate is added to the mixture of clay and phosphoric acid and is then directly grounded in the extruder machine where the aqueous clay paste is to be molded.

26. Ceramic material obtainable from the procedure defined in any one of the claims 18 to 25.

27. Ceramic material according to claim 26, **characterized in that** it is a ceramic floor tile.

28. Use of the ceramic material defined in any one of the claims 26 or 27 in the construction industry.
